# FASCICULE DE BREVET EUROPEEN

(11) **EP 0 631 858 B1**
(45) Date de publication et mention de la délivrance du brevet: **26.02.1997**
(21) Numéro de dépôt: 94401466.1
(22) Date de dépôt: 28.06.1994
(51) Int. Cl.: B29C 70/54, B29C 69/00, F42B 10/06

(54) **Procédé de fabrication d'une pièce en matériau composite composée d'un corps central et d'ailerons**
Verfahren zur Herstellung eines Formteils aus Verbundwerkstoff zusammengestellt aus einem zentralen Körper und Stabilisierungsflossen
Method for manufacturing a fibre reinforced composite workpiece comprising a central body and fins

(30) Priorité: 30.06.1993 FR 9307981
(43) Date de publication de la demande: 04.01.1995
(73) Titulaire: AEROSPATIALE Société Nationale Industrielle, 75781 Paris Cédex 16 (FR)
(72) Inventeur: Fages, Jacques, F-93170 Bagnolet (FR)
(74) Mandataire: Ilgart, Jean-Christophe

(56) Documents cités:
- EP-A- 0 014 186
- WO-A-92/20503
- FR-A- 2 556 650

## Description

L'invention se rapporte à un procédé de fabrication d'une pièce en matériau composite composée d'un corps central muni d'ailerons (appelés aussi "nageoires") et qui peut être un corps de missile.

Les matériaux composites se sont largement répandus dans l'aéronautique grâce à leur légèreté. Un autre de leurs avantages est qu'ils permettent d'éviter des usinages qui sont nécessaires pour former et assembler certaines pièces si on les réalise en métal. Les brevets français 2 565 159 et 2 556 650 décrivent ainsi respectivement comment fabriquer une structure de forme complexe en enroulant des filaments constituant l'armature du matériau autour de mandrins de forme simple, puis en tronçonnant l'enroulement et en assemblant les pièces obtenues par le tronçonnage, et comment réaliser une pièce analogue à celle de l'invention. On s'aperçoit à la lecture de ces brevets que les techniques spécifiques au façonnage de matériaux composites sont cependant compliquées à mettre en oeuvre pour certaines formes de pièces et par exemple que le drapage de feuilles de matériau composite autour d'un galbe de formation d'un aileron nécessite des opérations manuelles délicates.

Le procédé de fabrication de la pièce est, selon l'invention, perfectionné et simplifié par rapport au brevet 2 556 650. Il comprend comme dans ce brevet précédent une étape d'enroulement d'un filament autour d'un mandrin central ayant une forme semblable à celle du creux du corps central pour constituer ce dernier, mais il est caractérisé en ce qu'il comprend en outre les étapes de :
- regroupement de mandrins périphériques en nombre égal aux ailerons et pourvus chacun de deux faces de contact mutuel, d'une face d'ajustement au corps central et de deux faces d'ajustement aux ailerons qui relient la face d'ajustement au corps central à respectivement une des faces de contact mutuel, en assemblages où les faces de contact mutuel sont accolées par paires et où les faces d'ajustement forment pour chaque assemblage une surface continue et fermée sur elle-même ;
- enroulement d'un filament autour des assemblages ;
- coupure des enroulements autour des assemblages où les faces de contact mutuel sont accolées ;
- séparation des assemblages et pressage des mandrins périphériques sur le mandrin central, les faces d'ajustement au corps central faisant face au mandrin central et les faces d'ajustement aux ailerons se faisant face par paires ;
- et, comme connu en soi, imprégnation du filament et polymérisation du matériau imprégné.

Des modes de réalisation préférés sont décrit dans les revendications 2 à 10.

Un produit thermodurcissable synthétique imprègne en effet le filament pour constituer le matériau de complément du composite qui sera ensuite polymérisé pour former un corps solide. L'imprégnation peut déjà être faite quand le filament est sur la bobine (il est alors appelé "pré-imprégné"), mais on peut aussi la reporter après la formation de l'enroulement, comme il est maintenant bien connu dans cette technique (le filament est alors appelé "sec").

Les ailerons peuvent être renforcés si on prévoit des étapes d'enroulement d'un filament autour d'au moins un mandrin oblong, de coupure de l'enroulement pour en tirer des bandes, et d'interposition des bandes entre les faces d'ajustement aux ailerons quand lesdites faces se font face.

Il est avantageux, au moins dans certaines circonstances, de coller des contre-formes sur les faces d'ajustement au corps central pour constituer des saillies entre les faces d'ajustement aux ailerons quand le filament est enroulé sur les assemblages, puis de retirer ces contre-formes quand les mandrins périphériques sont pressés sur le mandrin central. Cette disposition se révèle intéressante dans le cas habituel où le corps central est cylindrique et où les faces d'ajustement sont concaves en conséquence. L'enroulement est alors tendu au-dessus de la face d'ajustement, entre les arêtes qui la limitent, et a donc une plus petite surface qu'elle. Quand le presssage a lieu sur le mandrin central, l'enroulement est refoulé au fond des faces d'ajustement au corps, ce qui oblige à le fendre au préalable et implique qu'une cannelure soit formée sur le corps central, qui se trouve affaibli. Cet inconvénient est évité si les saillies ont une surface équivalente à celle des faces d'ajustement.

On va maintenant passer aux commentaires des figures suivantes, qui détaillent certaines réalisations du procédé conforme à l'invention :
- la figure 1 représente la pièce à obtenir,
- la figure 2 décomposée en 2A, 2B, 2C et 2D représente les éléments essentiels de l'outillage pour la mise en oeuvre d'une réalisation de l'invention,
- la figure 3 représente le mode de pressage pour obtenir la pièce,
- la figure 4 représente un autre assemblage possible des mandrins,
- la figure 5 représente le pressage dans ce cas,
- et les figures 6A, 6B et 7 représentent un autre mode d'assemblage de mandrins et de pressage.

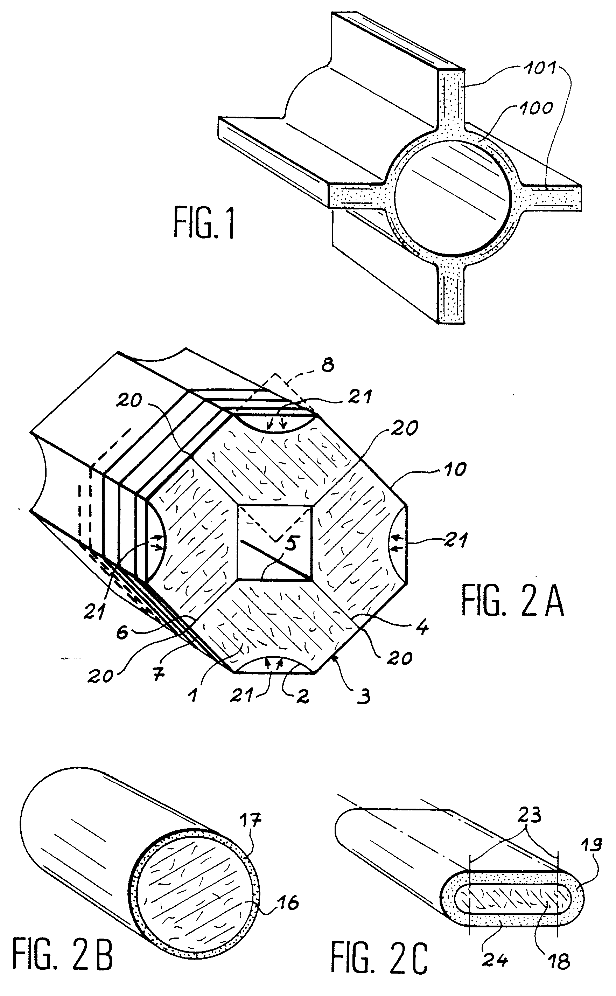

La pièce de la figure 1 est donc un corps de missile composé d'un corps central 100 cylindrique autour duquel s'étendent quatre ailerons 101 disposés à angle droit et unis au corps central 100 par une arête.

La figure 2A représente un assemblage de quatre mandrins périphériques 1 en forme d'hexagones irréguliers et dont le pourtour comprend successivement une face d'ajustement au corps central 2, une première face d'ajustement aux ailerons 3, une face de contact mutuel 4, une face de pressage 5, une seconde face de contact mutuel 6 et une seconde face d'ajustement aux ailerons 7. La face d'ajustement au corps central 2 est en forme d'arc de cercle concave, et les autres sont droites. La face de contact mutuel 4 de tous les mandrins périphériques 1 est accolée à l'autre face de contact mutuel 6 d'un autre des mandrins périphériques 1. Une des faces d'ajustement aux ailerons 3 de tous les mandrins périphériques 1 prolonge l'autre face d'ajustement aux ailerons 7 d'un autre des mandrins périphériques 1. De plus, les faces d'ajustement aux ailerons 3 et 7 et de contact mutuel 4 et 6 de chacun des mandrins périphériques 1 sont inscrites dans les côtés d'un parallélépipède 8 virtuel à section carrée dont on a représenté les portions de côtés non matérialisées en tirets. Quant aux faces de pressage 5, elles délimitent un volume inoccupé au centre de l'assemblage.

Un enroulement est effectué autour de l'assemblage ; il porte la référence 10, adhère aux faces d'ajustement aux ailerons 3 et 7 et est tendu au-dessus des faces d'ajustement au corps central 2. Il est donc en forme d'octogone isocèle, à côtés droits et irréguliers.

La figure 2D démontre que l'assemblage peut concrètement être réalisé en serrant les mandrins périphériques 1, mis côte à côte préalablement, entre deux flasques 11, enfilés sur un axe 12 ainsi que deux curseurs 13 qui comprennent chacun une vis 14 de pression sur l'axe 12 et servent à maintenir les mandrins périphériques 1 serrés axialement entre les flasques 11. Des systèmes de tenons et mortaises entre les mandrins périphériques 1 et les flasques 11 peuvent permettre de réaliser un assemblage parfait. L'enroulement 10 est produit par un filament 26 ou une fibre formant l'armature du matériau composite de la pièce à fabriquer et qui est au départ enroulée sur une bobine 27 coulissant sur un second axe 25 parallèle à l'axe 12. La rotation de l'axe 12 tire le filament 26 et la translation de la bobine 27 provoque l'égalisation de l'enroulement 10 entre les deux flasques 11.

L'outillage comprend encore (figures 2B et 2C) un mandrin central 16 de forme cylindrique autour duquel on réalise un enroulement central 17 et un mandrin oblong 18, à section rectangulaire et très plate sauf aux extrémités, qui sont arrondies, autour duquel on réalise un enroulement 19 destiné à la confection des ailerons 101. Les enroulements 17 et 19 peuvent être réalisés comme l'enroulement 10 par le dévidage du filament d'une bobine et après avoir installé des flasques aux extrémités des mandrins 16 et 18.

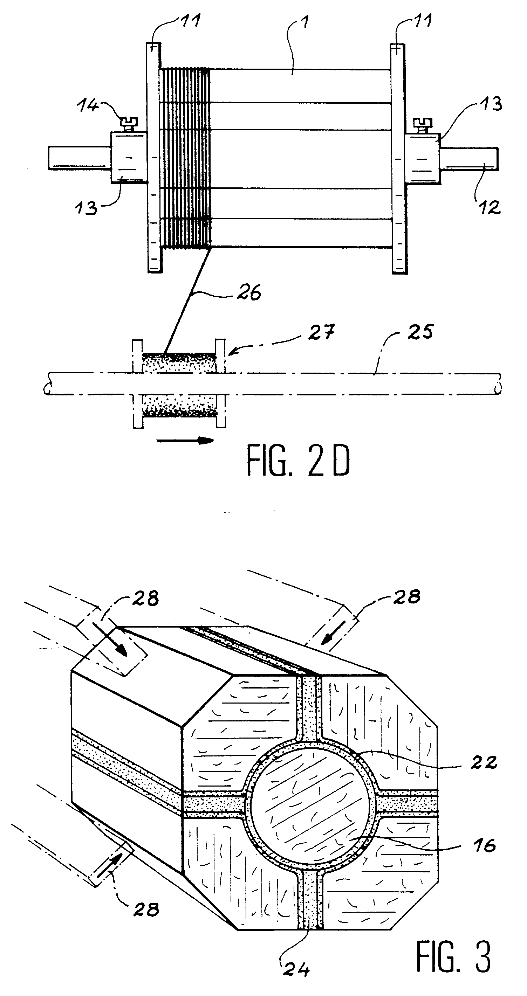

On revient à la figure 2A. La suite du procédé consiste à fendre ou couper l'enroulement 10 en huit endroits suivant des lignes longitudinales : aux jonctions 20 des mandrins périphériques 1 entre eux, où les faces de contact mutuel 4 et 6 sont accolées, et devant les centres 21 des faces d'ajustement au corps 2. Puis les mandrins périphériques 1 sont détachés, retournés et pressés sur le mandrin central 16 par leurs faces d'ajustement au corps central 2, dont le rayon de courbure est choisi sensiblement égal au rayon du mandrin central 16 augmenté des épaisseurs des enroulements 10 et 17 ; les parties de l'enroulement 10 qui étaient tendues au-dessus des faces d'ajustement au corps 2 sont donc refoulées par l'enroulement 17 jusqu'à se mouler contre les faces d'ajustement au corps 2, et les fentes réalisées aux endroits 21 s'ouvrent, ce qui produit une rainure longitudinale 22 sur le corps central 100, devant chacun des mandrins périphériques 1 (figure 3).

L'enroulement d'ailerons 19 est coupé en bandes le long des grands côtés plats du mandrin oblong 18, par exemple par des coupures 23 situées près des extrémités, pour obtenir des âmes 24 intercalées entre les portions de l'enroulement 10 qui collent sur les faces d'ajustement aux ailerons 3 et 7. Les âmes 24 permettent de choisir librement l'épaisseur des ailerons 101 mais restent facultatives. Le pressage est accompli par des vérins 28 (ou par frettage de fils) qui s'appuient sur les faces de pressage 5 et poussent les mandrins périphériques 1 dans des directions concentriques, vers le centre du mandrin central 16.

L'assemblage et le compactage des différents enroulements 10, 17 et 19 assurent la cohésion du corps central 100 et des ailerons 101, grâce à la solidification de la matrice d'imprégnation lors de la polymérisation du matériau composite, qui s'accomplit pendant cette phase de mise en oeuvre, après quoi les mandrins périphériques 1 et le mandrin central 16 sont retirés ; l'extraction de ce dernier ne pose pas de problème car son coefficient de dilatation est sensiblement plus important que celui du composite, de sorte qu'il se détache du corps central 100 en se contractant plus que lui quand il est refroidi.

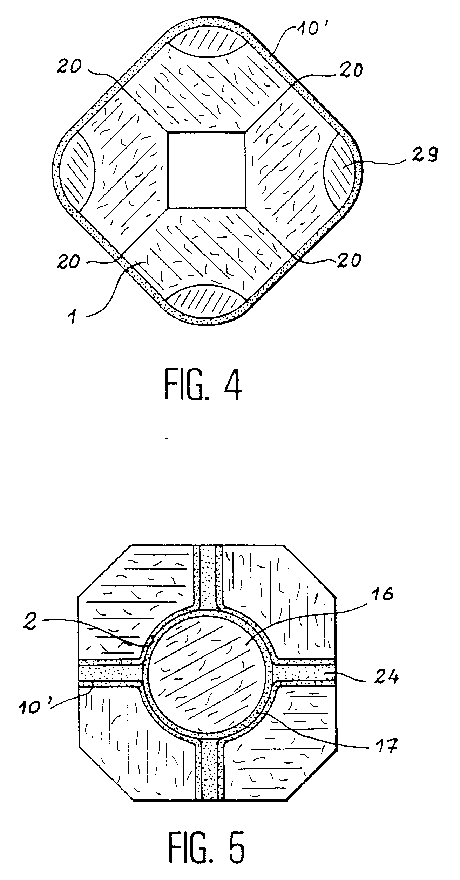

Un perfectionnement du procédé est représenté à la figure 4. Il porte plus précisément sur l'assemblage des mandrins périphériques 1, qui est complété par rapport à la figure 2A par des contre-formes de remplissage 29 légèrement collées aux faces d'ajustement au corps 2. La section des contre-formes 29 est sensiblement en amande, c'est-à-dire qu'elle est délimitée par deux arcs de cercle et que l'enroulement périphérique, référencé ici 10', épouse la forme d'un assemblage sans concavité, en carré aux angles arrondis : les contre-formes de remplissage 29 tendent l'enroulement 10' et sont donc en saillie sur l'assemblage. L'assemblage des mandrins périphériques 1 au mandrin central 16, analogue à celui de la figure 3, est représenté à la figure 5 et implique au préalable de chasser les contre-formes de remplissage 29 et de couper l'enroulement périphérique 10' aux jonctions 20 des mandrins périphériques 1, mais pas aux endroits 21 de la figure 2A : les portions de l'enroulement périphérique 10' qui adhéraient aux contre-formes de remplissage 29 s'ajustent exactement sur les faces d'ajustement au corps central 2, quand l'assemblage des mandrins 1 et 16 est réalisé ; il n'y a donc pas de rainure longitudinale 22, et le corps central 100 est lisse dans cette réalisation.

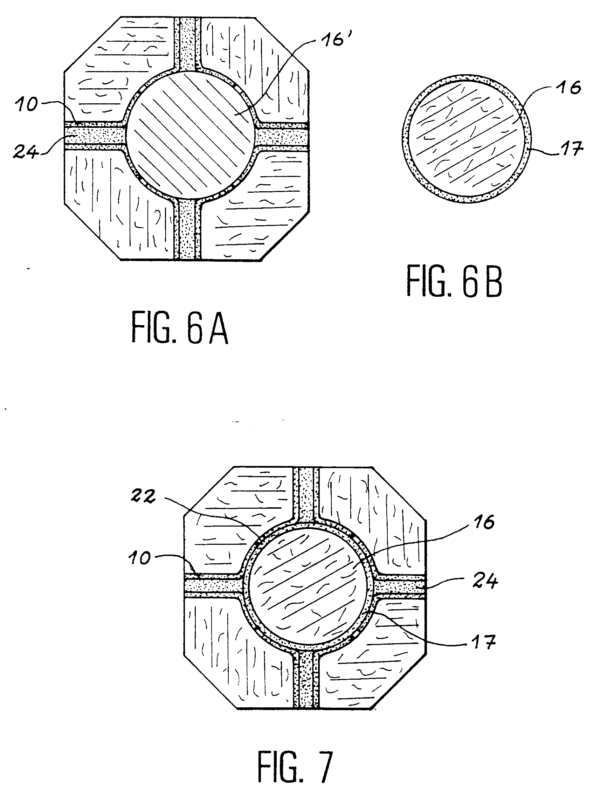

Une autre variante du procédé, utilisable en combinaison avec l'une ou l'autre des deux variantes qui précède, consiste à réaliser et polymériser l'enroulement central 17 (figure 6B) indépendamment d'une première séquence d'assemblage et de pressage illustrée à la figure 6A, au cours de laquelle l'enroulement 10 ou 10' périphérique est pressé entre un second mandrin central 16', de diamètre légèrement plus grand que celui du premier mandrin central 16, et les faces d'ajustement au corps central 2. La polymérisation de l'enroulement 10 ou 10' et des âmes 24 est produite à ce moment. Puis le second mandrin central 16' est remplacé par le premier mandrin central 16 revêtu de l'enroulement central 17. Une polymérisation supplémentaire a lieu pour solidifier la colle déposée entre les enroulements 10 ou 10' et 17, lors de cette seconde séquence d'assemblage et la pièce est alors achevée.

On a représenté une situation à quatre ailerons 101 et quatre mandrins périphériques 1. Si les mandrins périphériques 1 doivent être identiques en nombre aux ailerons, ce nombre peut éventuellement être différent de quatre : une solution consiste à construire un corps central à six ailerons et six mandrins périphériques 1, qui sont rassemblés en deux assemblages de trois mandrins périphériques conformes aux figures 2A et 4. D'autres réalisations découlent de façon évidente de ce principe.

## Revendications

1. Procédé de fabrication d'une pièce en matériau composite composée d'un corps central creux (100) autour duquel sont assemblés par une arête des ailerons (101) orientés dans des directions divergentes, comprenant une étape d'enroulement d'un filament (26) autour d'un mandrin central (16) ayant une forme semblable à celle du creux, caractérisé en ce qu'il comprend en outre des étapes de :
- regroupement de mandrins périphériques (1) en nombre égal aux ailerons (101) et pourvus chacun de deux faces de contact mutuel (4, 6), d'une face d'ajustement au corps central (2) et de deux faces d'ajustement aux ailerons (3, 7) qui relient la face d'ajustement au corps central (2) à respectivement une des faces de contact mutuel, en assemblages où les faces de contact mutuel sont accolées par paires et où les faces d'ajustement forment pour chaque assemblage une surface continue et fermée sur elle-même ;
- enroulement d'un filament (26) autour des assemblages ;
- coupure des enroulements de filament autour des assemblages où les faces (20) de contact mutuel sont accolées ;
- séparation des assemblages et pressage des mandrins périphériques sur le mandrin central, les faces d'ajustement au corps central (2) faisant face au mandrin central (16) et les faces d'ajustement aux ailerons (3, 7) se faisant face par paires ;
- et, comme connu en soi, imprégnation du filament et polymérisation du matériau imprégné.

2. Procédé de fabrication d'une pièce suivant la revendication 1, caractérisé en ce qu'il comprend des étapes d'enroulement d'un filament autour d'au moins un mandrin oblong (18), de coupure de l'enroulement (19) pour en tirer des bandes, et d'interposition des bandes (24) entre les faces d'ajustement aux ailerons (3, 7), quand lesdites faces se font face.

3. Procédé de fabrication d'une pièce suivant l'une quelconque des revendications 1 ou 2, caractérisé en ce que le filament est sec.

4. Procédé de fabrication d'une pièce suivant l'une quelconque des revendications 1 ou 2, caractérisé en ce que le filement est pré-imprégné.

5. Procédé de fabrication d'une pièce suivant l'une quelconque des revendications 1 à 4, caractérisé en ce que des contre-formes (29) sont fixées sur les faces d'ajustement au corps central (2) pour constituer des saillies entre les faces d'ajustement aux ailerons (3,7) quand le filament est enroulé sur les assemblages, puis retirées quand les mandrins périphériques sont pressés sur le mandrin central.

6. Procédé de fabrication d'une pièce suivant l'une quelconque des revendications 1 à 5, caractérisé en ce que les enroulements (10, 17, 17', 24) de filament (10 et 24 ou 10' et 24) sont bobinés et polymérisés séparément puis assemblés par collage.

7. Procédé de fabrication d'une pièce suivant l'une quelconque des revendications 1 à 5, caractérisé en ce que la polymérisation du matériau d'imprégnation de tous les enroulements est produite simultanément et pendant le pressage, l'enroulement autour du mandrin central précédant le pressage.

8. Procédé de fabrication d'une pièce suivant l'une quelconque des revendications 1 à 7, caractérisé en ce qu'il y a quatre ailerons et, pour chaque mandrin périphérique, les faces de contact mutuel et les faces d'ajustement aux ailerons sont situées sur un parallélépipède à section carrée.

9. Procédé de fabrication d'une pièce suivant l'une quelconque des revendications 1 à 8, caractérisé en ce que les mandrins périphériques (1) comprennent une face de pressage (5) qui relie les faces de contact mutuel (4, 6).

10. Procédé de fabrication suivant l'une quelconque des revendications précédentes, caractérisé en ce que la pièce est un corps de missile.

## Claims

1. Process for the production of a composite material part constituted by a hollow central body (100) around which are assembled by an edge ailerons (101) oriented in divergent directions, involving a stage of winding a filament (26) around a central mandrel (16) having a shape similar to that of the cavity, characterized in that it also comprises the stages of:
- regrouping peripheral mandrels (1) in a number equal to the ailerons (101) and provided in each case with two mutual contact faces (4, 6), a fitting face to the central body (2) and two fitting faces to the ailerons (3, 7) which connect the fitting face to the central body (2) to respectively one of the mutual contact faces, in assemblies where the mutual contact faces are joined in pairs and where the fitting faces form for each assembly a continuous surface which is closed on itself,
- winding a filament (26) around the assemblies,
- cutting the windings around the assemblies where the mutual contact faces (20) are joined,
- separating the assemblies and pressing the peripheral mandrels on the central mandrel, the fitting faces to the central body (2) facing the central mandrel (16) and the fitting faces to the ailerons (3, 7) facing one another in pairs,
- and, in per se known manner, impregnation of the filament and polymerization of the impregnated material.

2. Process for the production of a part according to claim 1, characterized in that it comprises stages of winding a filament around at least one oblong mandrel (18), cutting the winding (9) in order to draw strips therefrom and interposing the strips (24) between the fitting faces to the ailerons (3, 7) when said faces face one another.

3. Process for the production of a part according to either of the claims 1 and 2, characterized in that the filament is dry.

4. Process for the production of a part according to either of the claims 1 and 2, characterized in that the filament is preimpregnated.

5. Process for the production of a part according to any one of the claims 1 to 4, characterized in that counter-forms (29) are fixed to the fitting faces to the central body (2) in order to constitute projections between the fitting faces to the ailerons (3, 7) when the filament is wound on the assemblies and then withdrawn when the peripheral mandrels are pressed onto the central body.

6. Process for the production of a part according to any one of the claims 1 to 5, characterized in that the windings (10, 17, 17', 24) of the filament (10 and 24 or 10' and 24) are wound and polymerized separately and then assembled by bonding.

7. Process for the production of a part according to any one of the claims 1 to 5, characterized in that the polymerization of the impregnation material of all the windings is produced simultaneously and during pressing, the winding around the central mandrel preceding the pressing operation.

8. Process for the production of a part according to any one of the claims 1 to 7, characterized in that there are four ailerons and, for each peripheral mandrel, the mutual contact faces and the fitting faces to the ailerons are located on a parallelepiped with a square section.

9. Process for the production of a part according to any one of the claims 1 to 8, characterized in that the peripheral mandrels (1) have a pressing face (5) connecting the mutual contact faces (4, 6).

10. Production process according to any one of the preceding claims, characterized in that the part is a missile body.

## Patentansprüche

1. Verfahren zur Herstellung eines Formteils aus Verbundwerkstoff, gebildet durch einen hohlen Zentralkörper (100), um den herum mittels eines Grats in divergierende Richtungen orientierte Stabilisierungsflossen 101 angefügt werden, einen Wickelschritt eines Filaments (26) um einen Zentralkern (16) herum umfassend, der eine ähnliche Form aufweist wie der Hohlraum
**dadurch gekennzeichnet,**
daß es außerdem die folgenden Schritte umfaßt:
- Zusammenfassung von peripheren Kernen (1) gleicher Anzahl wie die Stabilisierungsflossen (101) und jeder versehen mit zwei gegenseitigen Kontaktflächen (4, 6), einer Zentralkern-Paßfläche (2) und zwei Stabilisierungsflossen-Paßflächen (3, 7), die die Zentralkörper-Paßfläche (2) verbinden mit jeweils einer der gegenseitigen Kontaktflächen, als Zusammenfügungen, wo die gegenseitigen Kontaktflächen paarweise angefügt werden und wo die Paßflächen bei jede Zusammenfügung eine kontinuierliche und in sich selbst geschlossene Fläche bilden;
- Wickeln eines Filaments (26) um die Zusammenfügungen;
- Durchschneiden der Filamentwicklungen um die Zusammenfügungen wo die gegenseitigen Kontaktflächen (20) aneinandergefügt sind;
- Trennen der Zusammenfügungen und Pressen der peripheren Kerne auf den zentralen Kern, wobei die Zentralkörper-Paßflächen (2) dem zentralen Kern (16) gegenüberstehen und die Stabilisierungsflossen-Paßflächen (3, 7) sich paarweise gegenüberstehen;
- und, wie an sich bekannt, Imprägnierung des Filaments und Polymerisation des imprägnierten Materials.

2. Herstellungsverfahren nach Anspruch 1, dadurch gekennzeichnet, daß es Wickelschritte eines Filaments um wenigstens einen länglichen Kern (18), des Zerschneidens der Umwicklung (19) zu Streifen und des Einfügens der Streifen (24) zwischen die Stabilisierungflossen-Paßflächen (3, 7) umfaßt, wenn besagte Flächen sich gegenüberstehen.

3. Herstellungsverfahren nach Anspruch 1 oder 2, dadurch gekennzeichnet, daß das Filament trocken ist.

4. Herstellungsverfahren nach einem der Ansprüche 1 oder 2, dadurch gekennzeichnet, daß das Filament vorimprägniert ist.

5. Herstellungsverfahren nach einem der Ansprüche 1 bis 4, dadurch gekennzeichnet, daß Gegenformen (29) auf den Zentralkörper-Paßflächen (2) befestigt werden, um Vorsprünge zu bilden zwischen den Stabilisierungsflossen-Paßflächen (3,7), wenn das Filament auf die Zusammenfügungen gewickelt wird, dann weggenommen werden, wenn die peripheren Kerne auf den zentralen Kern gepreßt werden.

6. Herstellungsverfahren nach einem der Ansprüche 1 bis 5, dadurch gekennzeichnet, daß die Wicklungen (10, 17, 17', 24) aus Filament (10 und 24 oder 10' und 24) getrennt gewickelt und dann durch Klebung zusammengesetzt werden.

7. Herstellungsverfahren nach einem der Ansprüche 1 bis 5, dadurch gekennzeichnet, daß die Polymerisation des Imprägnierungsmaterials aller Wicklungen simultan und während der Pressung erfolgt, wobei das Umwickeln des zentralen Kerns der Pressung vorausgeht.

8. Herstellungsverfahren nach einem der Ansprüche 1 bis 7, dadurch gekennzeichnet, daß es vier Stabilisierungflossen gibt und sich bei jedem peripheren Kern die gegenseitigen Kontaktflächen und die Stabilisierungsflossen-Paßflächen auf bzw. an einem Parallelflach mit quadratischem Querschnitt befinden.

9. Herstellungsverfahren nach einem der Ansprüche 1 bis 8, dadurch gekennzeichnet, daß die peripheren Kerne (1) eine Preßfläche (5) aufweisen, die die gegenseitigen Kontaktflächen (4, 6) verbindet.

10. Herstellungsverfahren nach einem der vorangehenden Ansprüche, dadurch gekennzeichnet, daß das Teil ein Raketenkörper bzw. -rumpf ist.
